# EUROPÄISCHE PATENTANMELDUNG

(11) **EP 4 534 291 A1**
(43) Veröffentlichungstag der Anmeldung: **09.04.2025**
(21) Anmeldenummer: 24202727.4
(22) Anmeldetag: 26.09.2024
(51) Int. Cl.: B33Y 50/00, G06T 17/00

(54) **VERFAHREN UND MODIFIKATIONSVORRICHTUNG ZUR MODIFIKATION VON OBERFLÄCHENBASIERTEN BILDDATEN EINES DREIDIMENSIONALEN GEOMETRISCHEN MODELLS**

(30) Priorität: 02.10.2023 DE 102023126837
(71) Anmelder: EOS GmbH Electro Optical Systems, 82152 Krailling (DE)
(72) Erfinder: Orend, Jan, 82319 Starnberg (DE)
(74) Vertreter: Beckord & Niedlich Patentanwälte PartG mbB

(57) **Zusammenfassung**

Diese Erfindung betrifft ein Verfahren zur Modifikation von oberflächenbasierten Bilddaten (O) eines dreidimensionalen geometrischen Modells (M), geeignet für die additive Fertigung eines Bauteils, die Bilddaten (O) umfassend Oberflächendaten (O) des Modells (M) mit geometrischen Informationen über eine Mehrzahl von Oberflächensegmenten (S), die zusammen die Oberfläche des Modells (M) ergeben, das Verfahren umfassend die Schritte:
- Erstellen einer Anzahl von Voxelgittern (G, G₁) mit jeweils einer Vielzahl von Voxeln (X, X₁), wobei jedes Voxelgitter (G, G₁) zumindest einen Teil der Oberflächensegmente (S) umfasst und umgibt,
- für die Voxel (X, X₁) der Voxelgitter (G, G₁):
a) Bestimmen einer Lageinformation (L), die angibt, ob das betreffende Voxel (X, X₁) innerhalb oder außerhalb der Konturen des Modells (M) liegt, und Zuordnen der Lageinformation (X, X₁) zu dem betreffenden Voxel (X, X₁) und/oder
b) Zuweisen eines individuellen Indexes (N) zu zumindest einem Teil der Oberflächensegmente (S) der Bilddaten (O), so dass jedes indizierte Oberflächensegment (S) anhand seines Indexes (N) unterscheidbar zu allen anderen indizierten Oberflächensegmenten (S) des Modells (M) ist und Zuordnen des Indexes (N) des nächstgelegenen Oberflächensegments (S) zu dem betreffenden Voxel (X, X₁), und/oder
c) Bestimmen eines Abstandes des betreffenden Voxels (X, X₁) zu der Oberfläche des Modells (M) und Zuordnung einer entsprechenden Abstandsinformation (A) zu dem betreffenden Voxel (X, X₁),

- Ausgeben der Voxel (X, X₁) mit den ihnen zugewiesenen Informationen (N, L, A). Weiterhin betrifft die Erfindung eine entsprechende Vorrichtung, eine Steuereinrichtung für eine Vorrichtung zur additiven Fertigung sowie eine entsprechende Fertigungsvorrichtung, einen modifizierten Datensatz und ein Fertigungsverfahren.

## Beschreibung

Die Erfindung betrifft ein Verfahren und eine Modifikationsvorrichtung zur Modifikation von oberflächenbasierten Bilddaten eines dreidimensionalen geometrischen Modells, insbesondere geeignet für die additive Fertigung eines Bauteils. Die Erfindung betrifft darüber hinaus eine Steuereinrichtung für eine Fertigungsvorrichtung zur additiven Fertigung eines Bauteils in einem Fertigungsprozess, bzw. eine entsprechende Fertigungsvorrichtung, einen Datensatz umfassend mannigfaltige Daten eines Modells sowie ein Fertigungsverfahren zur additiven Fertigung eines Bauteils.

Die Erstellung von (virtuellen) dreidimensionalen, geometrischen Modellen hat in den letzten Jahren eine zunehmende Bedeutung erlangt. Nicht nur für die rein grafische Darstellung, sondern auch zur Erstellung von realen Bauteilen durch automatisierte Fertigungsverfahren, sind solche (virtuellen) Modelle unerlässlich. Beispielsweise werden für additive Fertigungsverfahren die zu fertigenden Bauteile zunächst mit einem CAD-Programm als Modell erstellt, dann als oberflächenbasierte Information (oft als STL-Datei) abgespeichert und diese Information dann genutzt, um Bauteilschichten zu erstellen, damit das Bauteil schichtweise gemäß dem Modell aufgebaut werden kann.

Ein gravierender Nachteil, insbesondere bei komplexen Bauteilen, ist, dass Dateien mit oberflächenbasierten Informationen einen sehr großen Speicherbedarf haben können und nicht oder nur sehr schlecht modifiziert werden können. Liegen die oberflächenbasierten Informationen z.B. als reines Dreiecksnetz vor (z.B. in einer STL-Datei), ist es nur schwer möglich, Veränderungen an dem Modell durchzuführen, insbesondere mittels Boolscher Operatoren, wie z.B. eine Vereinigung, ein Ausschneiden oder das Bilden einer Schnittmenge. Zudem ist es genauso schwierig, Größen wie z.B. Abstände aus einer STL-Datei abzuleiten.

Auf der anderen Seite sind diese Veränderungen mit impliziten Geometrien, also Funktionen zu Formelementen, einfach möglich. So stehen in gängigen CAD-Programmen in der Regel Grundelemente wie Würfel, Zylinder oder Kugeln zur Verfügung, aus denen mittels Boolscher Operatoren oder anderer mathematischer Funktionen (z.B. einer Kantenabrundung) komplexe Modelle geformt werden können. Auch kann mittels einfacher trigonometrischer Funktionen ein sehr komplexes Modell definiert werden.

Aus impliziten Geometrien lassen sich auch Oberflächeninformationen oder Schichtinformationen (Konturen oder Rastergrafiken) in beliebiger Auflösung erzeugen, wodurch sie besonders für Fertigungsverfahren geeignet sind.

Letztendlich kann auch der Fall auftreten, dass für ein Bauteil implizite Geometrien überhaupt nicht zur Verfügung stehen, z.B. wenn dieses Bauteil mittels dreidimensionaler Scanverfahren in ein (virtuelles) Modell überführt worden sind, oder wenn besondere Geometrien vorliegen.

Aufgabe der Erfindung war es, die Nachteile des Standes der Technik zu überwinden und ein Verfahren sowie eine Modifikationsvorrichtung zur Verfügung zu stellen, mittels denen oberflächenbasierte Informationen zu einem Modell dermaßen modifiziert werden, dass eine nachträgliche Veränderung des Modells auf einfache und schnelle Art und Weise möglich ist. Insbesondere ist es ein Ziel der Erfindung, den Rechenaufwand und/oder Speicheraufwand für eine nachträgliche Änderung eines durch oberflächenbasierte Informationen definierten Modells zu optimieren. Eine besonders bevorzugte Aufgabe der Erfindung ist, ein als STL-Datei oder als eine entsprechende Datei exportiertes Modell mit impliziten Geometrien kombinieren zu können.

Diese Aufgabe wird durch ein Verfahren nach Anspruch 1, eine entsprechende Modifikationsvorrichtung nach Anspruch 10, eine Steuereinrichtung nach Anspruch 11, eine Fertigungsvorrichtung nach Anspruch 12, einen Datensatz nach Anspruch 13, sowie ein Fertigungsverfahren nach Anspruch 14 und durch ein Computerprogrammprodukt nach Anspruch 15 gelöst.

Das erfindungsgemäße Verfahren dient zur Modifikation von oberflächenbasierten Bilddaten eines dreidimensionalen geometrischen Modells, geeignet für die additive Fertigung eines Bauteils. Oberflächenbasierte Bilddaten sind im Stand der Technik gut bekannt und umfassen (insbesondere ausschließlich) die oben genannten oberflächenbasierten Informationen. Dies sind Oberflächendaten des Modells mit geometrischen Informationen über eine Mehrzahl von Oberflächensegmenten (z.B. Dreiecken), die zusammen die Oberfläche des Modells ergeben.

Es handelt sich also bei den oberflächenbasierten Bilddaten um Daten, die eine Oberfläche eines 3D-Körpers beschreiben, insbesondere ohne sein Volumen zu umfassen (nur indirekt durch die Anordnung der Oberflächensegmente, die auch als "Facetten" bezeichnet werden können). Sie stellen bevorzugt Netzkoordinaten (Punkte) eines dreidimensionalen Modells dar, welche mittels (insbesondere gerader) Kanten verbunden sind und insbesondere Polygone bilden. Die Bilddaten können zusätzlich noch weitere Informationen umfassen, z.B. Daten zu den Flächennormalen der Oberflächensegmente. Ein weithin bekanntes Format für oberflächenbasierte Bilddaten ist das sogenannte "STL-Format", wobei das Akronym "STL" ursprünglich für "Stereolithographie" stand, nun aber auch als "Standard Triangle Language" oder "Standard Tessellation Language" interpretiert wird (mit englisch "tessellation" = "Parkettierung"). Das STL-Format beschreibt die Oberfläche von 3D-Körpern mithilfe von Dreiecksfacetten. Jede Dreiecksfacette wird durch die drei Eckpunkte und die zugehörige Flächennormale des Dreieckes charakterisiert. Sind die drei Eckpunkte beim Blick auf eine Dreiecksfläche gegen den Uhrzeigersinn angeordnet, wird die Fläche als Außenseite eines Volumenkörpers angenommen. Die Flächennormale weist immer aus dem Körper heraus. Auch wenn eine Unterteilung in Dreiecke besonders vorteilhaft ist, müssen die Bilddaten nicht unbedingt darauf festgelegt sein.

Kurz zusammengefasst umfassen die Bilddaten Informationen zur Oberfläche eines 3D-Körpers aber bevorzugt keine Informationen zur impliziten Geometrie des Körpers.

Das erfindungsgemäße Verfahren umfasst die folgenden Schritte:
- Erstellen einer Anzahl von Voxelgittern mit jeweils einer Vielzahl von Voxeln, wobei jedes Voxelgitter zumindest einen Teil der Oberflächensegmente umfasst und umgibt,
- für die Voxel der Voxelgitter:
   a) Bestimmen einer Lageinformation, die angibt, ob das betreffende Voxel innerhalb oder außerhalb der Konturen des Modells liegt, und Zuordnen der Lageinformation zu dem betreffenden Voxel und/oder
   b) Zuweisen eines individuellen Indexes zu zumindest einem Teil der Oberflächensegmente der Bilddaten, so dass jedes indizierte Oberflächensegment anhand seines Indexes unterscheidbar zu allen anderen indizierten Oberflächensegmenten des Modells ist und Zuordnen des Indexes des nächstgelegenen Oberflächensegments zu dem betreffenden Voxel, und/oder
   c) Bestimmen eines Abstandes des betreffenden Voxels zu der Oberfläche des Modells und Zuordnung einer entsprechenden Abstandsinformation zu dem betreffenden Voxel,
- Ausgeben der Voxel mit den ihnen zugewiesenen Informationen.

Wie oben gesagt, umfassen die Bilddaten Oberflächensegmente, z.B. Dreiecke. Zum besseren Verständnis kann man annehmen, dass die Bilddaten aus einer Vielzahl von Tripeln aus Koordinaten von Punkten bestehen, die jeweils die drei Eckpunkte eines Dreiecks angeben.

Zumindest einem Teil der Oberflächensegmente, bevorzugt allen Oberflächensegmenten, wird ein jeweils individueller Index zugewiesen. Um die Bilddaten des Körpers vollständig zu modifizieren, ist es sinnvoll, wenn allen Oberflächensegmenten ein individueller Index zugeordnet wird. Dieser Index kann z.B. eine fortlaufende Nummer oder eine individuelle Zeichenkette (z.B. eine Adresse) sein. Es kann aber auch z.B. eine Koordinate sein, z.B. die des Schwerpunktes bzw. des Mittelpunktes eines Oberflächensegments.

Für eine Zuordnung der in dem Verfahren betrachteten Voxel ist es bevorzugt, dass zumindest ein Teil der Oberflächensegmente mit einem Index indiziert sind und jedes indizierte Oberflächensegment durch den Index unterscheidbar zu allen anderen indizierten Oberflächensegmenten des Modells ist. Die Indices sollten also alle voneinander unterschiedlich sein.

Die Bezeichnung "Voxel" setzt sich aus dem englischen "volume" (vox) und "element" (el) zusammen und bezeichnet in der Computergrafik ein Gitterelement, also ein Volumen, in einem dreidimensionalen Gitter. Bei zweidimensionalen Rastergrafiken hat sich für die Bildpunkte der Begriff "Pixel" (für "picture element") etabliert. Ein Voxel ist die dreidimensionale Entsprechung eines Pixels. Im Sinne der Erfindung ist ein Voxel ein (insbesondere kubisches) Volumenelement in einem dreidimensionalen Gitter.

Es wird nun mindestens ein Gitter ("Voxelgitter") erstellt, welches (insbesondere indizierte) Oberflächensegmente in seinem inneren hat. Die Wortwahl "umfasst und umgibt" soll dabei klarstellen, dass das Gitter über die Oberflächensegmente hinausragt, aber nicht nur außerhalb der Oberflächensegmente liegt (wie eine umgebende Haut), sondern auch in dem Volumen der Oberflächensegmente definiert ist (also auch durch die Oberflächensegmente verläuft). Bevorzugt werden die betreffenden Oberflächensegmente (insbesondere alle Oberflächensegmente des Körpers) von einer dreidimensionalen Begrenzung ("Bounding Box") umgeben, und das von dieser Begrenzung umgebene Volumen vollständig durch das Gitter in Voxel unterteilt.

Für die Voxel der Voxelgitter, also bevorzugt für jedes einzelne Voxel, werden nun besondere Schritte durchgeführt. Es können dabei durchaus Voxel in Gruppen zusammengefasst werden, für die die Schritte offensichtlich identische Informationen ergeben würden. Dies sind z.B. Voxel, denen die gleichen Werte zugeordnet sind. Für Abstandsinformationen wird dieser Fall sehr selten auftreten, aber für Indices und Lageinformationen öfter. Das Zusammenfassen kann bevorzugt für die unterschiedlichen Informationen (Abstand, Lageinformation, Index) getrennt erfolgen.

Zunächst wird die Lageinformation des betreffenden Voxels bestimmt. Diese Lageinformation gibt an, ob das betreffende Voxel innerhalb oder außerhalb der Konturen des Modells (also des 3D-Körpers) liegt. Stammen die Bilddaten aus einer STL-Datei, so kann man z.B. aus der Anordnung der Eckpunkte schließen, wo außen und wo innen ist. Es können auch die Flächennormalen der Oberflächensegmente dafür verwendet werden. Insbesondere kann aus den Flächenormalen direkt das Vorzeichen bestimmt werden. Eine andere sehr robuste aber rechenintensive Methode ist eine Bestimmung von allen Schnittpunkten einer Strecke vom betrachteten Punkt zu einem Punkt, bei dem man sich sicher ist, dass er außerhalb liegt. Eine weitere bevorzugte Methode ist die Bestimmung der Kontur in einer Ebene (dem Schnitt der Ebene mit der Bauteiloberfläche), in der der Punkt liegt, zu bestimmen, und dann mit einer Winding-Number-Methode aus der Kontur das Vorzeichen zu bestimmen. Wenn aber nur ein Voxelmodell oder einer Rastergrafik mit der Lageinformation gefüllt werden soll, kann dies z.B. auch mit einem "Flood fill" erfolgen. Man startet dazu mit einem Voxel, von dem man sicher weiß, dass es innerhalb liegt. Dazu kann man die Normale des Dreiecks nutzen, und einen Punkt wählen der auf der innenliegenden Seite in unmittelbarer Nähe zum Dreieck liegt. Von diesen Punkt aus werden dann alle Nachbarpunkte ausgefüllt, wenn diese nicht von einem Dreieck geschnitten werden. Das gleiche wird für die Nachbarpunkte wiederholt, bis alle relevanten Voxel bearbeitet wurden.

Die Lageinformation kann in einem bevorzugten einfachen Fall zwei Werte annehmen, einen ersten Wert (z.B. "-" oder "wahr"), wenn das Voxel im Inneren des Modells liegt und einen zweiten Wert (z.B. "+" oder "falsch"), wenn das Voxel außerhalb des Modells liegt. Ein Voxel liegt innerhalb (außerhalb) des Modells, wenn ein überwiegender Teil des Voxels innerhalb (außerhalb) des Modells liegt. Alternativ liegt ein Voxel innerhalb (außerhalb) des Modells, wenn der Mittelpunkt des Voxels innerhalb (außerhalb) des Modells liegt. Es ist auch möglich zu definieren, ob Voxeln, durch die ein Oberflächensegment verläuft (d.h., Voxel, die von daem Oberflächensegment des Modells geschnitten sind), die gleiche

Lageinformation wie Voxel innerhalb oder außerhalb des Modells zugeordnet werden muss. D.h., es kann z.B. definiert werden, dass die Lageinformation der Voxel, die von einem Oberflächensegment des Modells geschnitten werden, den gleichen Wert wie die Voxel, die innerhalb des Modells liegen, annehmen (z.B. "-" oder "wahr"). Alternativ kann es definiert werden, dass die Lageinformation der Voxel, die von einem Oberflächensegment des Modells geschnitten werden, den gleichen Wert wie die Voxel, die außerhalb des Modells liegen, annehmen (z.B. "+" oder "falsch").

In einem weiteren bevorzugten Fall kann die Lageinformation drei Werte annehmen, je nachdem, ob der Voxel (ganz) innerhalb oder außerhalb des Modells liegt oder die Oberfläche des Modells das Voxel scheidet (d.h., der Voxel liegt auf der Oberfläche des Modells). In diesen Fall kann die Lageinformation einen ersten Wert (z.B. "-"), wenn das Voxel im Inneren des Modells liegt, einen zweiten Wert (z.B. "+") wenn das Voxel außerhalb des Modells liegt und einen dritten Wert (z.B. "0"), wenn das Oberflächensegment durch das Voxel verläuft (d. h. wenn das Voxel von einer Kontur bzw. ein Oberflächensegment des Modells geschnitten wird).

Diese Lageinformation wird dann dem betreffenden Voxel zugeordnet. Dies kann z.B. dadurch geschehen, dass sie direkt als Information des Voxels abgespeichert wird, oder mit dem betreffenden Voxel verknüpft wird, z.B. mittels eines Pointers. In einer dreidimensionalen Computergrafik hat ein Voxel eine Koordinate und eine Farbinformation. Die Lageinformation kann z.B. in einem Farbkanal eines solchen Voxels abgespeichert werden.

Zusätzlich oder alternativ zur Lageinformation (bevorzugt zusätzlich) wird noch der Index des nächstgelegenen Oberflächensegments zu dem betreffenden Voxel zugeordnet. Die Zuordnung kann entsprechend der Lageinformation erfolgen (also z.B. auch in einem Farbkanal). Wie der Abstand eines Punktes (dem Voxel) zu einer Fläche bestimmt wird, ist im Stand der Technik ausreichend bekannt. Als Abstand wird in der Geometrie stets der kürzeste Abstand berechnet. Der Index desjenigen Oberflächensegments, welches auf einer Geraden liegt, welche den kürzesten Abstand zwischen den Oberflächensegmenten und dem betreffenden Voxel markiert, wird dem betreffenden Voxel zugeordnet. Die Zuweisung eines Indexes kann aber auch ohne eine Ermittlung des Abstandes erfolgen, z. B. dadurch dass allen Voxeln innerhalb einer Bounding Box um das Oberflächensegment herum der Index des betreffenden Oberflächensegments zugeordnet wird und lediglich für Voxel, denen zwei oder mehr Indices zugeordnet werden, nähere Untersuchungen durchgeführt werden. Mit "Abstand" kann insbesondere der quadratische Abstand gemeint sein, der insbesondere Berechnungen basierend auf dem Satz des Pythagoras vereinfacht. Voxeln, die von mehreren Oberflächensegmenten geschnitten werden, wird bevorzugt nicht nur ein Index zugewiesen, sondern eine Liste mit den Indices aller Oberflächensegmente, die diesen Voxel schneiden. Bei einer Untersuchung von Indices der Nachbarvoxel wird dann bevorzugt der kleinste Abstand zu allen Oberflächensegmenten mit den Indices bestimmt.

Besonders bevorzugt wird einem Voxel sowohl die Lageinformation als auch der Index zugeordnet.

Zusätzlich oder alternativ zur Lageinformation und/oder dem Index wird der Abstand des betreffenden Voxels zu der Oberfläche des Modells ermittelt. Dies wurde bereits im vorangehenden Absatz beschrieben. Die Zuordnung einer entsprechenden Abstandsinformation zu dem betreffenden Voxel kann entsprechen der Zuordnung der Lageinformation erfolgen, z.B. in einem Farbkanal. Besonders bevorzugt wird einem Voxel der Index des nächstgelegenen Oberflächensegments zugeordnet, der Abstand zwischen dem Voxel und dem indizierten Oberflächensegment berechnet und es werden der berechnete Abstand und der Index des indizierten Oberflächensegments dem Voxel zugewiesen.

Die Voxel mit den ihnen zugewiesenen Informationen werden dann ausgegeben, z. B. abgespeichert oder für weitere Berechnungen verwendet. Im Grunde können die Voxel zur Ermittlung einer impliziten Geometrie verwendet werden oder direkt für die Ausführung Boolscher Operatoren. Sollten in den Voxeln Informationen zu Abständen vorliegen, könnten diese bereits eine implizite Geometrie beschreiben. Ebenso wie bei impliziten Oberflächen, die durch Funktionen beschrieben werden, lassen sich Bool'sche Operationen durch einfache min/max-Operationen realisieren, z.B. Minimum der Abstände zu zwei Unterschiedlichen Bauteilen für eine Vereinigung.

Eine erfindungsgemäße Modifikationsvorrichtung dient zur Modifikation von oberflächenbasierten Bilddaten eines dreidimensionalen geometrischen Modells geeignet für die additive Fertigung eines Bauteils. Die Bilddaten umfassen dabei Oberflächendaten des Modells mit geometrischen Informationen über eine Mehrzahl von Oberflächensegmenten, die zusammen die Oberfläche des Modells ergeben. Die Modifikationsvorrichtung umfasst die folgenden Komponenten:
- eine Datenschnittstelle ausgelegt zum Empfang der Bilddaten,
- eine Begrenzungseinheit ausgelegt zum Erstellen einer Anzahl von Voxelgittern mit jeweils einer Vielzahl von Voxeln, wobei jedes Voxelgitter zumindest einen Teil der Oberflächensegmente umfasst und umgibt,
- eine Prozesseinheit ausgelegt zum:
   a) Bestimmen einer Lageinformation, die angibt, ob das betreffende Voxel innerhalb oder außerhalb der Konturen des Modells liegt, und Zuordnen der Lageinformation zu dem betreffenden Voxel und/oder
   b) Zuordnen des Indexes des nächstgelegenen Oberflächensegments zu dem betreffenden Voxel, wobei die Modifikationsvorrichtung eine Indexeinheit umfasst, ausgelegt zum Zuweisen eines individuellen Indexes zu zumindest einem Teil der Oberflächensegmente, so dass jedes indizierte Oberflächensegment anhand seines Indexes unterscheidbar zu allen anderen indizierten Oberflächensegmenten des Modells ist,
      und/oder
   c) Bestimmen eines Abstandes des betreffenden Voxels zu der Oberfläche des Modells und Zuordnung einer entsprechenden Abstandsinformation zu dem betreffenden Voxel,
- eine Datenschnittstelle ausgelegt zum Ausgeben der Voxel mit den ihnen zugewiesenen Informationen.

Mit diesen modifizierten Bilddaten kann nun das Modell modifiziert werden, z.B. mit einer Struktur versehen werden, damit das später erstellte Bauteil diese Struktur auch aufweist.

Die Arbeitsweise der einzelnen Komponenten wurde vorangehend bereits ausführlich im Rahmen des Verfahrens beschrieben. Die Modifikationsvorrichtung ist bevorzugt zur Ausführung des erfindungsgemäßen Verfahrens ausgelegt.

Erfindungsgemäße Steuerdaten zur Steuerung einer Fertigungsvorrichtung zur additiven Fertigung werden aus modifizierten Bilddaten erstellt. Dabei werden die modifizierten (und ggf. bearbeiteten) Bilddaten bevorzugt wieder in oberflächenbasierte Bilddaten konvertiert und daraus Steuerdaten erstellt. Die Erstellung von Steuerdaten aus oberflächenbasierten Bilddaten (oder auch anderen Bilddaten) ist im Stand der Technik bekannt. Zusätzlich zu den Steuerdaten können aus modifizierten Bilddaten Größen (z.B. der Abstand zur Bauteilunter- oder Oberseite) ermittelt werden. Die Steuerdaten und/oder zusätzliche Steuerdaten können basierend auf den aus den modifizierten Bilddaten ermittelten Größen erstellt werden.

Eine erfindungsgemäße Steuereinrichtung für eine Fertigungsvorrichtung zur additiven Fertigung eines Bauteils in einem Fertigungsprozess, in welchem in einem Baufeld Aufbaumaterial, vorzugsweise umfassend ein Metallpulver, schichtweise aufgebaut wird, und jeweils zwischen dem Aufbringen zweier Materialschichten von Aufbaumaterial eine selektive Verfestigung von Aufbaumaterial dadurch erfolgt, dass eine Bestrahlung des Aufbaumaterials mit zumindest einem Energiestrahl mittels einer Bestrahlungsvorrichtung erfolgt, umfasst eine erfindungsgemäße Modifikationsvorrichtung.

Eine erfindungsgemäße Fertigungsvorrichtung zur additiven Fertigung zumindest eines Bauteils in einem additiven Fertigungsprozess umfasst zumindest
- eine Zuführvorrichtung zum Aufbringen von Materialschichten von Aufbaumaterial auf ein Baufeld in einem Prozessraum,
- eine Bestrahlungsvorrichtung, um Aufbaumaterial durch Bestrahlung mit zumindest einem Energiestrahl selektiv zu verfestigen, insbesondere zwischen dem Aufbringen zweier Materialschichten, sowie
- eine erfindungsgemäße Steuereinrichtung.

Ein erfindungsgemäßer Datensatz umfasst Oberflächendaten eines Modells zusammen mit Daten einer Vielzahl von Voxeln mit den ihnen zugewiesenen Informationen, die mittels eines erfindungsgemäßen Verfahrens erstellt worden sind, insbesondere Steuerdaten zur Steuerung einer Fertigungsvorrichtung zur additiven Fertigung, welche basierend auf den Voxeln nach einem erfindungsgemäßen Verfahren generiert worden sind.

Bei einem erfindungsgemäßen Fertigungsverfahren zur additiven Fertigung eines Bauteils wird in einem Baufeld Aufbaumaterial, vorzugsweise umfassend ein Metallpulver, schichtweise aufgebaut, und jeweils zwischen dem Aufbringen zweier Materialschichten von Aufbaumaterial selektiv verfestigt, und zwar dadurch, dass eine Bestrahlung des Aufbaumaterials mit zumindest einem Energiestrahl basierend auf Bilddaten erfolgt, die mittels eines erfindungsgemäßen Verfahrens modifiziert worden sind. Zur Erstellung von Schichtstrukturen des Bauteils wird der Energiestrahl dabei innerhalb festgelegter Bereiche der Schichtstruktur gemäß entsprechenden Steuerdaten (die auf den modifizierten Bilddaten basierten) entlang einer Anzahl von parallelen Verfestigungsbahnen über das Baufeld bewegt.

Die Erfindung kann insbesondere in Form einer Rechnereinheit mit geeigneter Software realisiert sein. Die Rechnereinheit kann z.B. hierzu einen oder mehrere zusammenarbeitende Mikroprozessoren oder dergleichen aufweisen. Insbesondere kann sie in Form von geeigneten Softwareprogrammteilen in der Rechnereinheit realisiert sein. Eine weitgehend softwaremäßige Realisierung hat den Vorteil, dass auch schon bisher verwendete Rechnereinheiten, insbesondere Steuereinrichtungen von Fertigungsvorrichtungen, auf einfache Weise durch ein Software- bzw. Firmware-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer Rechnereinheit, insbesondere einer Steuereinrichtung, ladbar ist, mit Programmabschnitten, um alle Schritte des erfindungsgemäßen Verfahrens auszuführen, wenn das Programm in der Rechnereinheit ausgeführt wird. Ein solches Computerprogrammprodukt kann neben dem Computerprogramm gegebenenfalls zusätzliche Bestandteile wie z. B. eine Dokumentation und/oder zusätzliche Komponenten, auch Hardware-Komponenten, wie z.B. Hardware-Schlüssel (Dongles etc.) zur Nutzung der Software, umfassen. Zum Transport zur Rechnereinheit und/oder zur Speicherung an oder in der Rechnereinheit kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Gemäß einem bevorzugten Verfahren werden Voxel, denen derselbe Index und/oder dieselbe Lageinformation zugewiesen sind, zu einer Gruppe zusammengefasst. Dies vereinfacht und beschleunigt nachfolgende Berechnungen, da dann zuweilen nur eine einzige Berechnung für die gesamte Gruppe, also für alle Voxel der Gruppe zusammen, durchgeführt werden muss. Bevorzugt werden dabei Voxel, denen eine Abstandsinformation zugewiesen ist, als einzelne Voxel behandelt. Diese Voxel werden also bevorzugt nicht mit anderen Voxeln einer Gruppe zugeordnet.

Bevorzugt sind die den Voxeln zugewiesenen Informationen den Voxeln oder einer Gruppe direkt zugeordnet. Dies bedeutet, dass die Voxel bzw. die Gruppen jeweils die ihnen zugewiesenen Informationen umfassen oder dass den Voxeln (bzw. Gruppen) ein Hinweis zugeordnet wird, der zu diesen Informationen führt, z.B. einen Pointer.

Gemäß einem bevorzugten Verfahren werden mehrere Voxelgitter unterschiedlicher Auflösung und/oder unterschiedlicher Größe erstellt und eine Zuordnung einer Abstandsinformation und/oder eines Index und/oder einer Lageinformation zu dem betreffenden Voxel erfolgt in Abhängigkeit dazu, in welchem Voxelgitter dieses Voxel liegt. Es kann dabei durchaus sein, dass Voxeln eines Voxelgitters nur ein Index zugewiesen wird und Voxeln eines anderen Voxelgitters, Lageinformation und/oder Abstand, bevorzugt zusammen mit einem Index. Es ist dabei bevorzugt, dass zumindest ein erstes Voxelgitter und ein zweites Voxelgitter derart definiert werden, dass das erste Voxelgitter eine gröbere Auflösung als das zweite Voxelgitter hat und/oder größer ist als das zweite Voxelgitter, wobei im letzteren Fall das zweite Voxelgitter bevorzugt innerhalb des ersten Voxelgitters liegt.

Bevorzugt ist die Zuordnung von Informationen zu einem Voxel von einem auf einen Abstandswert bezogenen Grenzwert abhängig. Insbesondere wird Voxeln innerhalb des Grenzwerts, also mit einem Abstand kleiner als der Grenzwert, ein Abstandswert (und bevorzugt noch eine Lageinformation und/oder ein Index) zugeordnet und Voxeln außerhalb des Grenzwerts lediglich ein Index und/oder eine Lageinformation. Die Voxelgitter können aber auch als Begrenzungsbereiche dienen und damit im Grunde die Aufgabe eines solchen Grenzwerts wahrnehmen. Wird sowohl ein Grenzwert verwendet als auch mehrere Voxelgitter, so kann durchaus in jedem Voxelgitter ein individueller Grenzwert gelten. In einer bevorzugten praktischen Anwendung werden in Voxeln eines groben Voxelgitters nur die Lageinformation und/oder der Index abgespeichert und in den Voxeln eines feinen Gitters die Abstandsinformation (ggf. zusammen mit Index und/oder Lageinformation).

Im Hinblick auf den vorgenannten Grenzwert wird gemäß einem bevorzugten Verfahren nur Voxeln eine Abstandsinformation zugeordnet, die einen Abstand geringer als einen vorbestimmten maximalen Abstand von der Oberfläche haben. Dieser vorbestimmte maximale Abstand wäre dann ein Grenzwert. Bevorzugt ist der maximale Abstand im ersten Voxelgitter größer ist als im zweiten Voxelgitter. Bevorzugt wird im ersten Voxelgitter den Voxeln eine Lageinformation und/oder ein Index zugeordnet und keine Abstandsinformation. Bevorzugt wird jedem Voxel, dem eine Abstandsinformation zugewiesen wird, zumindest auch eine Lageinformation zugewiesen.

Gemäß einem bevorzugten Verfahren wird für die Bestimmung von Abstand und/oder Index und/oder Lageinformation ein Voxelgitter voxelweise durchgerastert, der betreffende Wert für jedes Voxel des Voxelgitters bestimmt und zugeordnet, und bei der Bestimmung des Abstandes ausgehend von jedem durchgerasterten Voxel bevorzugt der kürzeste Abstand zur Oberfläche des Modells bestimmt.

Gemäß einem bevorzugten Verfahren wird für die Bestimmung von Abstand und/oder Index und/oder Lageinformation das Modell Oberflächensegmentweise durchgerastert und für die das jeweilige Oberflächensegment umgebenden Voxel, der für jedes Voxel betreffende Wert bestimmt und dem betreffenden Voxel zugeordnet.

Es ist dabei bevorzugt, dass im Rahmen einer Überprüfung bezüglich einem ersten Voxel die dieses Voxel umgebenden Voxel daraufhin überprüft werden, ob diesen ein Index eines anderen Oberflächensegments zugewiesen wurde als dem ersten Voxel. Im positiven Falle wird zusätzlich der Abstand des ersten Voxels zu dem anderen Oberflächensegment ermittelt und bestimmt, ob dieser Abstand kleiner ist als der Abstand zu dessen ursprünglich zugeordnetem Oberflächensegment. Dadurch werden Fehler bei der Zuordnung der Informationen minimiert.

Gemäß einem bevorzugten Verfahren sind die oberflächenbasierten Bilddaten (oder "Oberflächendaten") des Modells Netzkoordinaten dreidimensionaler Datenmodelle, insbesondere ausgelegt für die Fertigung mittels additiver Fertigungsverfahren. Bevorzugt sind die Oberflächendaten Daten zur Stereolithographie bzw. einer Standard Triangle Language (bzw. Standard Tessellation Language) abgefasst. Es werden z.B. bevorzugt STL-Dateien verwendet.

Gemäß einem bevorzugten Verfahren werden die ausgegebenen Voxel mit den ihnen zugewiesenen Informationen dazu verwendet, das Modell zu modifizieren. Dies ist eine sehr wichtige mögliche Anwendung des Verfahrens. Im einleitenden Teil wurde gesagt, dass oberflächenbasierte Daten für nachträgliche Änderungen eines Bauteils nicht optimal sind oder auch überhaupt nicht verwendet werden können. Mit den nun zusätzlich mit Informationen versehen Voxeln kann nun eine effektive Modifizierung des Bauteils durchgeführt werden, z.B. kann das Bauteil strukturiert oder mittels anderer Körper verändert werden, insbesondere unter der Verwendung von Boolschen Operatoren. Bevorzugt wird dabei das Verfahren auf mehrere Modelle angewendet und diese Modelle wirken insbesondere mittels Boolscher Operationen aufeinander. Es werden dabei insbesondere zwei Modelle vereinigt (logisches ODER), voneinander subtrahiert (logisches UND mit einem invertierten Eingang für die Voxel des abzuziehenden Modells) oder es wird eine Schnittmenge der Modelle gebildet (logisches UND). Es sollte beachtet werden, dass ein Modell durchaus eine als mathematische Funktion beschriebe implizite Oberfläche sein kann. Eine Operation kann dann auch mittels dieser Abstandsfunktionen durchgeführt werden. Beispielsweise kann eine Vereinigung eines Modells A mit einem Modell B, wobei A und B Abstandsfunktionen sind berechnet werden. A und B können dabei rein mathematische Funktionen sein oder ein Abstand zu einem Gitter, der mithilfe der Informationen aus dem Voxel-Modell berechnet wird. Die Modifikationen von Modellen können beliebig verschachtelt sein.

Das Modell kann also insbesondere nachträglich erweitert oder strukturiert werden.

Gemäß einem bevorzugten Verfahren ist Voxeln eines Voxelgitters ein Index eines Oberflächensegments zugewiesen. Nach der Erfindung ist dies das jeweils nächstliegende Oberflächensegment. Bevorzugt gilt dies für das feinste Voxelgitter, also dasjenige mit der feinsten Auflösung. Hier kann aber auch ein Gitter nur im Randbereich, also im Bereich der Oberflächensegmente, mit dem Index verknüpft sein.

Für eine Vielzahl von Punkten werden dann die folgenden Schritte durchgeführt:
- Auswählen eines Punktes, in einem Voxel des Voxelgitters,
- Ermitteln des Abstandes des Punktes von dem Oberflächensegment dem der betreffende Index zugewiesen ist,

Bezüglich der Auswahl kann ein Punkt vorab gewählt werden und überprüft werden, ob dieser Punkt in einem Voxel des Voxelgitters liegt. Wenn ja, wird das Verfahren durchgeführt, wenn nein, kann diesem Punkt, z.B. eine Lageinformation zugewiesen werden. Es kann aber auch ein Voxel betrachtet werden und bewusst Punkte in dem Voxel ausgewählt werden.

Bevorzugt werden zusätzlich die folgenden Schritte durchgeführt:
- Prüfen ob sich der Index von dem Index eines Nachbarvoxels unterscheidet, und wenn ja: Ermitteln des Abstandes des Punktes von dem Oberflächensegment dem der betreffende Index des Nachbarvoxels zugewiesen ist,
- Vergleichen der ermittelten Abstände und auswählen des kleinsten Abstandes.

Dies erlaubt, den Abstand des Punktes von der Oberfläche noch genauer zu bestimmen.

Gemäß einer bevorzugten Ausführungsform des Verfahrens ist den Voxeln des Voxelgitters zusätzlich eine Abstandsinformation zugewiesen. Bevorzugt wird dann der Abstand des Punktes von dem Oberflächensegment nur dann ermittelt, wenn der aus der Abstandsinformation ablesbare Abstand des Voxels einen Maximalabstand unterschreitet. Ein Maximalabstand ist z.B. ein definierter Schwellenwert, der insbesondere abhängig von der Voxelgröße und/oder einer Oberflächeneigenschaft gewählt werden kann. Unterschreitet also z.B. der Betrag der im Voxel gespeicherten Abstandsinformation einen Maximalwert (einen definierten Schwellwert), dann wird eine genaue Berechnung des Abstandes durchgeführt. "Ermitteln des Abstands" bedeutet also in diesem Fall, dass eine genaue Rechnung des Abstands durchgeführt wird. Weiter bevorzugt wird dem Punkt die Abstandinformation und/oder die Lageninformation des Voxels zugewiesen, wenn der aus der Abstandinformation ablesbare Abstand des Voxels einen Maximalabstand (einen definierten Schwellenwert) überschreitet. "Ermitteln des Abstands" bedeutet also in diesem Fall, dass der aus der Abstandinformation ablesbare Abstand des Voxels (ohne dass eine genaue Berechnung durchgeführt wird) ermittelt wird.

Gemäß einer bevorzugten Ausführungsform des Verfahrens ist den Voxeln des Voxelgitters zusätzlich eine Lageinformation zugewiesen, Bevorzugt wird dann diese Lageinformation dem Punkt zugewiesen. In dem Fall, dass die Lageinformation eine Lage des Voxels auf dem Rand anzeigt, wird bevorzugt zusätzlich die entsprechende Lageinformation für den Punkt berechnet.

Es wird also eine Funktion F(P) angewandt, die für einen Punkt P(x,y,z) im Raum mithilfe des Voxelmodells einen Abstand und bevorzugt auch eine Lageinformation liefert. Solch eine Funktion ist generell bekannt, bei der z.B. mit einfachen trigonometrischen Längenbestimmungen rund um den Punkt herum die Abstände zu Oberflächenelementen bestimmt werden. Die Besonderheit der Erfindung, dass die Indexinformation verwendet wird, um ein bestimmtes Oberflächensegment auszuwählen, reduziert den Rechenaufwand dabei erheblich. Es ist also möglich, basierend auf dem Voxelgitter einen Abstand zwischen der Oberfläche des Modells und einem Punkt P(x,y,z) im 3D-Raum ressourcensparend zu ermitteln. Der ermittelte Abstand kann zur Generierung von Befehlen (Slicing, Stützstrukturen, usw.) benutzt werden.

Für den Punkt P wird dabei bevorzugt das Voxel V in dem Gitter mit der feinsten Auflösung gesucht. Dem Voxel kann zusätzlich zum Index eine Lageinformation L zugeordnet sein, was die Entscheidung vereinfacht, ob der Punkt außerhalb oder innerhalb des Bauteils liegt. Dass ein Voxel gesucht wird bedeutet, wie eingangs erwähnt, dass der Punkt P einem Voxel zugeordnet wird, in dem der Punkt P liegt oder dass der Punkt P einem nächstgelegenen Voxel zugeordnet wird, wenn der Punkt P nicht innerhalb eines Voxels liegt. Dass bevorzugt ein Voxel mit der feinsten Auflösung gesucht wird, bedeutet also z.B., dass ein Punkt P, der gleichzeitig in zwei Voxeln liegt, dem Voxel aus den zwei Voxeln, in denen der Punkt P liegt, mit der feinsten Auflösung zugeordnet wird. Der Voxel, der zuerst gesucht wird bzw. dem zuerst ein Punkt P zugeordnet wird, wird im Folgenden auch "Heimatvoxel" genannt.

Der Rechenaufwand kann weiter reduziert werden, wenn das Voxel zusätzlich eine Abstandsinformation umfasst und eine Berechnung für den Punkt nur durchgeführt wird, wenn der Abstand des Voxels zum nächstliegenden Oberflächenelement einen bestimmten Betrag unterschreitet. Ansonsten kann dem Punkt die Abstandsinformation des Voxels oder dessen Lageinformation zugewiesen werden.

Nachdem der Abstand von P zu dem (dem Voxel nächstliegenden) Oberflächenelement berechnet wurde, ist im Grunde das Wesentliche für diesen Punkt bestimmt. Nun kann aber der Fall vorliegen, z.B. für einen Randpunkt des Voxels, dass ein anderes Oberflächenelement näher an diesem Punkt liegt. Der Index dieses anderen Oberflächenelements müsste dann aber auch einem Nachbarvoxel zugeordnet sein. Daher ist es bevorzugt, dass die Abstände von P zu allen Oberflächenelementen berechnet werden, auf die die Indices der Nachbarvoxel zeigen, falls sich diese vom Index des "Heimatvoxels" unterscheiden. Von den ermittelten Abständen wird dann das Minimum als Abstandswert für diesen Punkt ausgegeben.

Der Abstand von P kann aber auch aus einer Abstandsinformation des "Heimatvoxels" und/oder aus den Abstandsinformationen der benachbarten Voxel interpoliert werden, vorzugsweise durch eine bilineare Interpolation. Insbesondere kann der Abstand P aus den Abstandinformationen der benachbarten Voxeln interpoliert werden, wenn einem "Heimatvoxel" keine Abstandinformation zugeordnet wurde.

Ein modifiziertes Modell (also eine Modifikation des Modells, dessen Oberflächendaten initial zur Verfügung standen) umfasst im Wesentlichen eine Abstandsfunktion für jeden Punkt zur Oberfläche. Diese Abstandsfunktion ist dabei aus mathematischen Funktionen und Abstandsfunktionen im Sinne der obigen Beschreibung zusammengesetzt. Punkte, die entfernt vom Rand liegen, müssen nicht genau von der Abstandsfunktion erfasst sein. Hier kann eine einfache Lageinformation (innen/außen) ausreichend sein. In einem weiteren Schritt kann die Abstandsfunktion für das modifizierte Modell dazu genutzt werden, um direkt die Kontur für eine beliebige Schnittebene oder Schnittoberfläche (z.B. für Drucker, die nichtplaner drucken können) ermittelt oder ein Mesh generiert werden. Dies kann je nach dem verwendeten System Zeit und Aufwand sparen. Hierfür gibt es bekannte Algorithmen wie z.B. Marching Square oder Dual Contouring.

In der Praxis kann man wie folgt vorgehen: Es wird ein Punkt in einem Voxel gewählt, dem eine Abstandinformation zugeordnet wurde. Falls der Punkt in mehreren Voxeln von unterschiedlichen Gittern liegen sollte, sollte das Voxel des feinsten Gitters ausgewählt werden. Wenn der Punkt in der Mitte eines Voxels liegt, kann diesem Punkt einfach die Abstandsinformation des Voxels zugewiesen werden. Dieser Fall ist jedoch selten und eine diesbezügliche Überprüfung kann länger dauern als eine Abstandsberechnung für diesen Punkt. Wenn die Abstandsinformation des Voxels (in dem der Punkt liegt) einen Schwellenwert unterschreitet, wird der Abstand des Punktes zum Oberflächenelement mit dem identischen Index bestimmt. Überschreitet die Abstandsinformation den Schwellenwert, wird sie dem Punkt zugeordnet und es findet keine gesonderte Abstandsberechnung statt.

In dem Fall, dass dem Voxel kein Index zugeordnet ist, kann der Abstand zwischen Punkt und Modell "unmittelbar" berechnet werden, also ohne auf Informationen zuzugreifen, die in den Voxeln enthalten sind. Diese Berechnung kann insbesondere durch eine alternative (z.B. vereinfachte) Funktion erfolgen ("Ersatzfunktion"). Alternativ kann ein Abstand zwischen dem Punkt P(x,y,z) und einer Bounding-Box berechnet werden. Weiter kann auf gleiche Weise ein Abstand zwischen dem Punkt und einer Polynomfunktion berechnet werden, die eine ähnliche (z.B. vereinfachte) Form wie das Modell beschreibt. Es ist auch möglich, den Abstand zwischen dem Punkt und der Mitte des Modells zu ermitteln.

Gemäß einem bevorzugten Verfahren werden die ausgegebenen Voxel mit den ihnen zugewiesenen Informationen dazu verwendet, Schnittebenen des Modells zu erstellen, insbesondere für ein additives Fertigungsverfahren. Da dazu oftmals wieder Oberflächendaten des Modells erstellt werden, ist dies besonders vorteilhaft, wenn die Schnittebenen von einem modifizierten Modell wie vorangehend beschrieben erstellt werden.

Gemäß einem bevorzugten Verfahren werden die ausgegebenen Voxel mit den ihnen zugewiesenen Informationen dazu verwendet, Steuerdaten für eine Fertigungsvorrichtung zur additiven Fertigung eines Bauteils in einem Fertigungsprozess zu generieren. In diesem Fertigungsprozess wird in einem Baufeld Aufbaumaterial, vorzugsweise umfassend ein Metallpulver, schichtweise aufgebaut und es erfolgt jeweils zwischen dem Aufbringen zweier Materialschichten von Aufbaumaterial eine selektive Verfestigung von Aufbaumaterial dadurch, dass das Aufbaumaterials mit zumindest einem Energiestrahl bestrahlt wird.

In der Praxis sind die Bilddaten, wie oben bereits angedeutet bevorzugt die Koordinaten von Eckpunkten von Polygonen (den Oberflächensegmenten), insbesondere von Dreiecken, und ggf. deren Flächennormalen bzw. Richtungen von Flächennormalen (z.B. nach außen zeigende Einheitsvektoren). Diese Bilddaten beschreiben die äußere Form eines Körpers und implizieren, dass alles was im Inneren einer geschossenen Oberfläche liegt, zu dem Volumen dieses Körpers gehören muss. Das Volumen des Körpers und der umgebende Raum wird nun in eine Vielzahl von Voxeln unterteilt (ein Voxelgitter) und diesen Voxeln zumindest der Index zu dem nächstliegenden Oberflächensegment und/oder eine Lageinformation (innen, außen oder auf dem Rand) zugeordnet.

Wohlgemerkt muss nicht der gesamte Körper durch das Voxelgitter unterteilt werden, Im Grunde genügt es, einen Bereich des Körpers festzulegen, der verändert (z.B. Strukturiert) werden soll und diesen dann durch das Voxelgitter zu unterteilen. Man kann also auch annehmen, dass ein "Strukturbereich" definiert wird und dieser durch ein Voxelgitter unterteilt wird.

Zur Modifikation des Modells könnte bereits eine Lageinformation ausreichen. Mit Voxeln, denen eine Lageinformation zugeordnet ist, könnte z.B. bei einer Anwendung von Boolschen Operatoren im Verhältnis zu einem zweiten Körper entschieden werden, was mit diesen Voxeln geschehen soll. Wäre beispielsweise der zweite Körper ein Gitter mit einer regelmäßigen Strukturierung, und sollte diese aus dem Modell ausgeschnitten werden (oder eine Schnittmenge gebildet werden) so müsste einfach für jedes Voxel des Modells geschaut werden, ob es auf einem Voxel des Körpers liegt und wenn ja dieses Voxel entfernt werden (beim Ausschneiden) oder behalten werden (beim Bilden der Schnittmenge), sofern dessen Lageinformation besagt, dass es innerhalb des Modells liegt. Voxel außerhalb des Modells (durch Lageinformation gegeben) werden entfernt. Alle übriggebliebenen Voxel des Modells ergeben dann das modifizierte Modell.

Bei alleiniger Nutzung der Lagefunktion erhält man ein Voxelmodell, bei dem zwischen gefüllten oder nicht gefüllten Voxeln unterschieden wird, und dessen Oberfläche noch verbessert werden kann. Dies kann insbesondere durch die Abstandsinformation und den Index erreicht werden. Die Erfindung bietet damit die Möglichkeit, Oberflächen zu erzeugen, die implizit durch ein Distanzfeld beschrieben werden. Dadurch können implizite Geometrien mit einer akkurat definierten Oberfläche erzeugt werden. In den Voxeln werden dabei Abstandsinformationen gespeichert, aus denen die Oberfläche rekonstruiert werden kann. Bool'sche-Operationen lassen sich mit diesen Abstandsinformationen sehr einfach durchführen. Beispielsweise ist eine Vereinigung zweier Körper das Minimum beider Abstandsinformationen. Eine Differenz zweier Körper kann mit den Abstandsinformationen a und b der beiden Körper durch max(a,-b) dargestellt werden. Im Sinne der Erfindung ist der Index sehr vorteilhaft, um den exakten Abstand berechnen zu können, also für beliebige Punkte, die nicht auf dem Voxelraster liegen müssen (also irgendwo zwischen den Voxelmittelpunkten).

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine schematische, teilweise im Schnitt dargestellte Ansicht eines Ausführungsbeispiels einer Fertigungsvorrichtung zur additiven Fertigung mit einer erfindungsgemäßen Modifikationsvorrichtung,
Figur 2 ein Modell mit einem dieses Modell umfassendes und umgebendes Voxelgitter,
Figur 3 ein Modell mit Voxeln und unterschiedlicher Lageinformation,
Figur 4 zwei unterschiedlich feine Voxelgitter,
Figur 5 zeigt Voxel, denen entsprechend ihrer Lage unterschiedliche Informationen zugeordnet sind.
Figur 6 eine zweidimensionale Darstellung von einem feinen Gitter aus Voxeln mit Abstandsinformation und einem gröberen Gitter aus Voxeln nur mit Indices,
Figur 7 ein Blockdiagramm zum Verfahren.

Die nachfolgenden Ausführungsbeispiele werden mit Bezug auf eine Fertigungsvorrichtung 1 zur additiven Fertigung von Bauteilen in Form einer selektiven Lasersinter- oder Laserschmelzvorrichtung beschrieben, wobei explizit noch einmal darauf hingewiesen ist, dass die Erfindung nicht auf selektive Lasersinter- oder Laserschmelzvorrichtungen beschränkt ist.

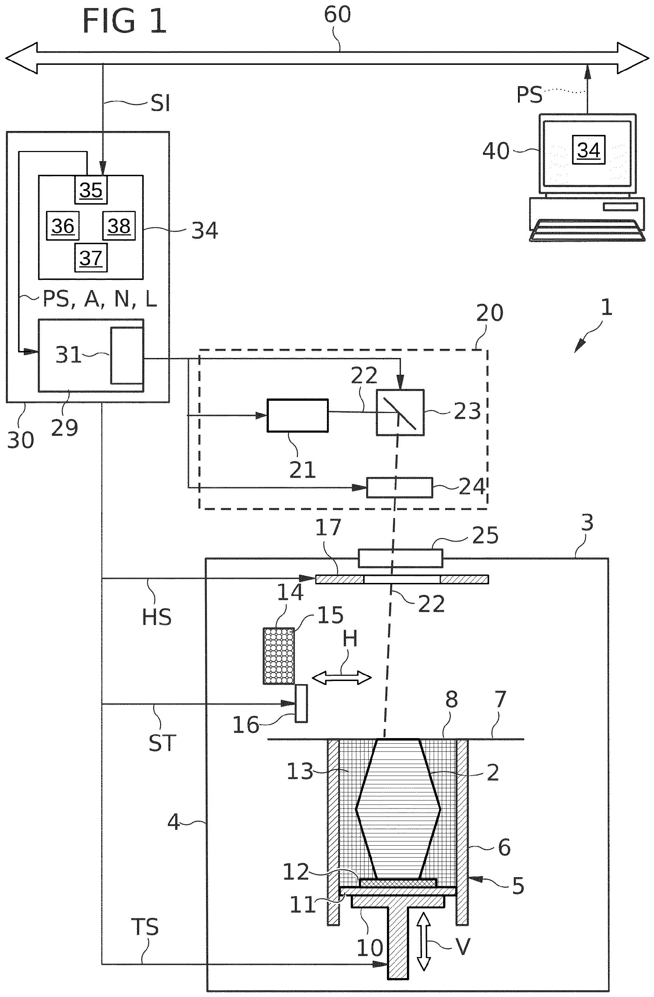

Eine solche Fertigungsvorrichtung 1 ist schematisch in Figur 1 gezeigt. Sie weist eine Prozesskammer 3 bzw. einen Prozessraum 3 mit einer Kammerwandung 4 auf, in der im Wesentlichen der Fertigungsprozess abläuft. In der Prozesskammer 3 befindet sich ein nach oben offener Behälter 5 mit einer Behälterwandung 6. Die obere Öffnung des Behälters 5 bildet die jeweils aktuelle Arbeitsebene 7. Der innerhalb der Öffnung des Behälters 5 liegende Bereich dieser Arbeitsebene 7 kann zum Aufbau des Objekts 2 verwendet werden und wird daher als Baufeld 8 bezeichnet.

Der Behälter 5 weist eine in einer vertikalen Richtung V bewegliche Grundplatte 11 auf, die auf einem Träger 10 angeordnet ist. Diese Grundplatte 11 schließt den Behälter 5 nach unten ab und bildet damit dessen Boden. Die Grundplatte 11 kann integral mit dem Träger 10 gebildet sein, sie kann aber auch eine getrennt von dem Träger 10 gebildete Platte sein und an dem Träger 10 befestigt oder auf diesem einfach gelagert sein. Je nach Art des konkreten Aufbaumaterials, also beispielsweise des verwendeten Pulvers, und des Fertigungsprozesses kann auf der Grundplatte 11 eine Bauplattform 12 als Bauunterlage angebracht sein, auf der das Objekt 2 aufgebaut wird. Grundsätzlich kann das Objekt 2 aber auch auf der Grundplatte 11 selbst aufgebaut werden, die dann die Bauunterlage bildet.

Der grundsätzliche Aufbau des Objekts 2 erfolgt, indem eine Schicht Aufbaumaterial 13 zunächst auf die Bauplattform 12 aufgebracht wird, dann mit einem Laserstrahl 22 als Energiestrahl an den Punkten, welche Teile des zu fertigenden Objekts 2 bilden sollen, das Aufbaumaterial 13 selektiv verfestigt wird, dann mit Hilfe des Trägers 10 die Grundplatte 11, somit die Bauplattform 12 abgesenkt wird und eine neue Schicht des Aufbaumaterials 13 aufgetragen und selektiv verfestigt wird usw. In Figur 1 ist das in dem Behälter auf der Bauplattform 12 aufgebaute Objekt 2 unterhalb der Arbeitsebene 7 in einem Zwischenzustand dargestellt. Es weist bereits mehrere verfestigte Schichten auf, umgeben von unverfestigt gebliebenem Aufbaumaterial 13. Als Aufbaumaterial 13 können verschiedene Materialien verwendet werden, vorzugsweise Pulver, insbesondere Metallpulver, Kunststoffpulver, Keramikpulver, Sand, gefüllte oder gemischte Pulver oder auch pastöse Materialien sowie optional eine Mischung mehrerer Materialien.

Frisches Aufbaumaterial 15 befindet sich in einem Vorratsbehälter 14 der Fertigungsvorrichtung 1. Mit Hilfe eines in einer horizontalen Richtung H bewegbaren Beschichters 16 kann das Aufbaumaterial in der Arbeitsebene 7 bzw. innerhalb des Baufelds 8 in Form einer dünnen Schicht aufgebracht werden.

Optional befindet sich in der Prozesskammer 3 eine zusätzliche Strahlungsheizung 17. Diese kann zum Beheizen des aufgebrachten Aufbaumaterials 13 dienen, so dass die für die selektive Verfestigung genutzte Bestrahlungseinrichtung nicht zu viel Energie einbringen muss. Das heißt, es kann beispielsweise mit Hilfe der Strahlungsheizung 17 schon eine Menge an Grundenergie in das Aufbaumaterial 13 eingebracht werden, welche natürlich noch unterhalb der notwendigen Energie ist, bei der das Aufbaumaterial 13 verschmilzt oder sintert. Als Strahlungsheizung 17 kann beispielsweise ein Infrarotstrahler oder VCSEL-Strahler genutzt werden.

Zum selektiven Verfestigen weist die Fertigungsvorrichtung 1 eine Bestrahlungsvorrichtung 20 bzw. konkret Belichtungsvorrichtung 20 mit einem Laser 21 auf. Dieser Laser 21 erzeugt einen Laserstrahl 22, der über eine Umlenkvorrichtung 23 umgelenkt wird, um so die gemäß der Belichtungsstrategie vorgesehenen Belichtungspfade oder Spuren (Hatchlinien) in der jeweils selektiv zu verfestigenden Schicht abzufahren und selektiv die Energie einzubringen. Weiter wird dieser Laserstrahl 22 durch eine Fokussiereinrichtung 24 auf die Arbeitsebene 7 in geeigneter Weise fokussiert. Die Bestrahlungsvorrichtung 20 befindet sich hier vorzugsweise außerhalb der Prozesskammer 3 und der Laserstrahl 22 wird über ein an der Oberseite der Prozesskammer 3 in der Kammerwandung 4 angebrachtes Einkoppelfenster 25 in die Prozesskammer 3 geleitet.

Die Bestrahlungsvorrichtung 20 kann beispielsweise nicht nur einen, sondern mehrere Laser umfassen. Vorzugsweise kann es sich hierbei um Gas- oder Festkörperlaser oder jede andere Art von Laser wie z. B. Laserdioden handeln, insbesondere VCSEL (Vertical Cavity Surface Emitting Laser) oder VECSEL (Vertical External Cavity Surface Emitting Laser) oder eine Zeile dieser Laser. Ganz besonders bevorzugt können im Rahmen der Erfindung ein oder mehrere unpolarisierte Single-Mode-Laser, z. B. ein 3 kW-Faserlaser mit einer Wellenlänge von 1070 nm, eingesetzt werden.

Zur Steuerung der Einheiten der Fertigungsvorrichtung 1 dient eine Steuereinrichtung 30 umfassend eine Steuereinheit 29, welche die Komponenten der Bestrahlungsvorrichtung 20, nämlich hier den Laser 21, die Umlenkvorrichtung 23 und die Fokussiervorrichtung 24, ansteuert.

Die Steuereinheit 29 steuert auch mittels geeigneter Heizungssteuerdaten HS die Strahlungsheizung 17 an, mittels Beschichtungssteuerdaten ST den Beschichter 16 und mittels Trägersteuerdaten TS die Bewegung des Trägers 10 und steuert somit die Schichtdicke.

Um an die Fertigungsvorrichtung 1 übergebene Bilddaten nachträglich zu modifizieren, z.B. mit einer Struktur zu versehen, umfasst diese hier eine Modifikationsvorrichtung 34. In diesem Beispiel ist diese dazu ausgelegt, von einem modifizierten Modell direkt Steuerdaten PS zu generieren.

Die Modifikationsvorrichtung 34 dient zur Modifikation von oberflächenbasierten Bilddaten O eines dreidimensionalen geometrischen Modells M des Bauteils 2. Die Bilddaten O umfassen dabei Oberflächendaten O des Modells M mit geometrischen Informationen über eine Mehrzahl von Oberflächensegmenten S, die zusammen die Oberfläche des Modells M ergeben. Die Modifikationsvorrichtung 34 umfasst hier eine Datenschnittstelle 35, welche zum Empfang dieser Bilddaten O und zum Ausgeben von Voxel X, X1 mit den ihnen zugewiesenen Informationen N, L, A ausgelegt ist. Diese Voxel bilden einen Bilddatensatz, der jedoch nicht (rein) oberflächenbasiert ist. Zusätzlich kann die Datenschnittstelle 34 auch noch zum Ausgeben der Steuerdaten PS an die Vorrichtung 1 zur additiven Fertigung eines Bauteils 2 ausgelegt sein.

Darüber hinaus umfasst die Modifikationsvorrichtung 34 noch eine Indexeinheit 36, eine Begrenzungseinheit 37 und eine Prozesseinheit 38.

Die Indexeinheit 36 ist zum Zuweisen eines individuellen Indexes N zu zumindest einem Teil der Oberflächensegmente S ausgelegt. Sie weist einen Index N so zu, dass jedes indizierte Oberflächensegment S anhand seines Indexes N unterscheidbar zu allen anderen indizierten Oberflächensegmenten S des Modells M ist. Dies kann dadurch erfolgen, dass für jedes Oberflächensegment S eine eigene Nummer oder eine eigene Zeichenkombination erstellt wird. Da jedes Oberflächensegment S z.B. einen Flächenschwerpunkt hat, an dem kein anderer Flächenschwerpunkt liegt, könnte ein Index die Koordinate des Flächenschwerpunkts sein.

Die Begrenzungseinheit 37 ist zum Erstellen einer Anzahl von Voxelgittern G, G1 mit jeweils einer Vielzahl von Voxeln X, X1 ausgelegt, wobei jedes Voxelgitter G, G1 zumindest einen Teil der indizierten Oberflächensegmente S umfasst und umgibt. Diese Oberflächensegmente liegen also innerhalb der Voxelgitter.

Die Prozesseinheit 38 ist für mehrere Funktionen ausgelegt, nämlich zum Bestimmen einer Lageinformation L, die angibt, ob das betreffende Voxel X, X1 innerhalb oder außerhalb der Konturen des Modells M liegt, und Zuordnen der Lageinformation L zu dem betreffenden Voxel X, X1 und/oder zum Zuordnen des Indexes N des nächstgelegenen Oberflächensegments S zu dem betreffenden Voxel X, X1, und/oder zum Bestimmen eines Abstandes A des betreffenden Voxels X, X1 zu der Oberfläche des Modells M und Zuordnung einer entsprechenden Abstandsinformation A zu dem betreffenden Voxel X, X1.

Die Modifizierungseinheit 34 ist bevorzugt auch zum Erstellen von Steuerdaten PS zum schichtweisen Aufbau eines Bauteils 2 ausgelegt, das auf einem modifizierten Modell M basiert. Weiter bevorzugt kann die Modifizierungseinheit zur Ermittlung aus dem modifizierten Modell M von Größen ausgelegt sein. Basierend auf den Größen können die Steuerdaten PS oder zusätzliche Steuerdaten PS ausgegeben werden.

Die Modifizierungseinheit 34 muss nicht zwingend Teil der Steuereinrichtung 30 sein, auch wenn dies bevorzugt ist. Sie kann auch extern vorliegen. Beispielsweise kann die Steuereinrichtung 30 wie hier dargestellt über einen Bus 60 oder eine andere Datenverbindung, mit einem Terminal 40 mit einem Display oder dergleichen gekoppelt sein. Über dieses Terminal 40 kann ein Bediener die Steuereinrichtung 30 und somit die gesamte Lasersintervorrichtung 1 steuern, z.B. durch Übermittlung von Steuerdaten PS, die dort von einer Modifizierungseinheit 34 erzeugt worden sind (wie gestrichelt angedeutet).

Es wird an dieser Stelle auch noch einmal darauf hingewiesen, dass die vorliegende Erfindung nicht auf eine solche Fertigungsvorrichtung 1 beschränkt ist. Sie kann auf andere Verfahren zum generativen bzw. additiven Herstellen eines dreidimensionalen Objekts durch schichtweises Aufbringen und selektives Verfestigen eines Aufbaumaterials angewendet werden, wobei ein Energiestrahl zum Verfestigen auf das zu verfestigende Aufbaumaterial abgegeben wird. Dementsprechend kann auch die Bestrahlungsvorrichtung nicht nur, wie hier beschrieben, ein Laser sein, sondern es könnte jede Einrichtung verwendet werden, mit der Energie als Wellen- oder Teilchenstrahlung selektiv auf bzw. in das Aufbaumaterial gebracht werden kann. Beispielsweise könnte anstelle eines Lasers eine andere Lichtquelle, ein Elektronenstrahl etc. verwendet werden.

Auch wenn in Figur 1 nur ein einzelnes Objekt 2 bzw. Bauteil 2 dargestellt wird, ist es möglich und in der Regel auch üblich, mehrere Objekte in der Prozesskammer 3 bzw. im Behälter 5 zeitlich parallel herzustellen. Dazu wird das Aufbaumaterial schichtweise an Stellen, die den Querschnitten der Objekte in der jeweiligen Schicht entsprechen, durch den Energiestrahl 22 abgetastet.

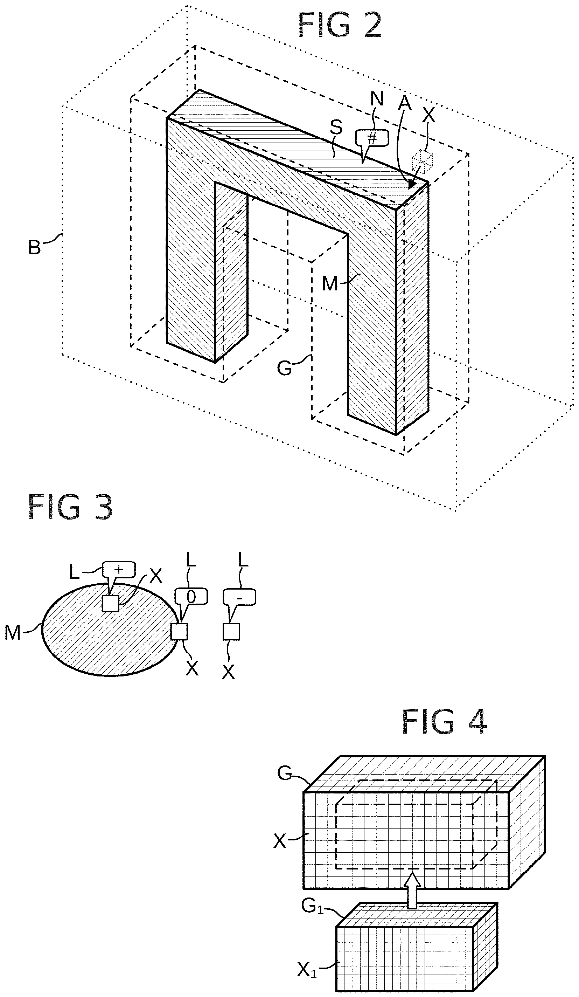

Figur 2 zeigt ein Modell M ähnlich der Form eines Hufeisenmagneten mit einem dieses Modell M umfassendes und umgebendes Voxelgitter G. In diesem Beispiel ist das Modell M von einer Bounding Box B (einem Begrenzungsbereich B) umgeben, der von einer Segmentierung des Modells M stammt. Das Modell M selber wird durch Oberflächendaten O gebildet, welche hier die oberflächenbasierten Bilddaten O darstellen. Innerhalb der Bounding Box B wurde ein Voxelgitter G aus Voxeln X definiert, welches das Modell M in seinem Inneren hat.

Es sei angemerkt, dass die Bounding Box B selbst das Volumen für ein Voxelgitter G bilden kann, also in ein Voxelgitter G unterteilt werden kann. Die Zeichnung kann auch durchaus als ein Beispiel für zwei Voxelgitter G angesehen werden, wenn man eine solche Unterteilung der Bounding Box B in Voxel X annähme. Alternativ kann die Boundig Box als ein aus einem einzigen Voxel bestehenden Voxelgitter sehen. Mit anderen Worten kann die Bounding Box gemäß der Offenbarung von Fig. 4 (siehe unten) als ein Voxelgitter mit der niedrigsten möglichen Auflösung (ein Voxel) gesehen werden.

Jedem der Oberflächensegmente S ist ein individueller Index N zugeordnet, der hier durch ein ,#' als eine Zahl symbolisiert wird. Das obere Rechteck könnte z.B. die 1 tragen, die seitlichen Rechtecke die 2 und 3, die hufeisenförmigen Flächen die 4 und 5, die Innenflächen 6 und 7 und die quadratischen Standflächen 8 und 9.

Als ein gepunkteter Würfel ist hier ein Voxel X des Voxelgitters G angedeutet, dessen Abstand A gemessen wird. Dieser Abstand A ist stets der kürzeste Abstand A zu dem nächstliegenden Oberflächensegment S. In dem vorgenannten Beispiel würde also dem Voxel X der Index N "1" zugeordnet werden.

Figur 3 zeigt ein einfaches Modell M mit Voxeln X und unterschiedlicher Lageinformation L. Das Modell ist zwar zweidimensional dargestellt, soll jedoch dreidimensional sein. Man kann sich die Figur sehr gut als Aufsicht auf eine dünne Scheibe vorstellen. Ein Voxel X ist innerhalb des Modells M angedeutet und trägt die Lageinformation L "+" und ein Voxel X ist außerhalb des Modells M angedeutet und trägt die Lageinformation L "-". Ein drittes Voxel X liegt genau auf dem Rand des Modells, wird also von einem Oberflächensegment S durchdrungen. Diesem Voxel X ist die Lageinformation L "0" zugeordnet.

Figur 4 zeigt zwei unterschiedlich feine Voxelgitter G, G₁ mit unterschiedlicher Auflösung, bzw. Größe der Voxel X, X₁. Oben ist ein erstes, gröberes und größeres Voxelgitter G angedeutet und unten ein feineres und kleineres Voxelgitter G₁. Die gestrichelte Kontur im ersten Voxelgitter G soll andeuten, dass das zweite Voxelgitter G₁ innerhalb des ersten Voxelgitters G liegen soll (s. Pfeil). Im Inneren des zweiten Voxelgitters G₁ kann man sich ein Modell M vorstellen, welches damit von beiden Voxelgittern G, G₁ umgeben und umfasst wird.

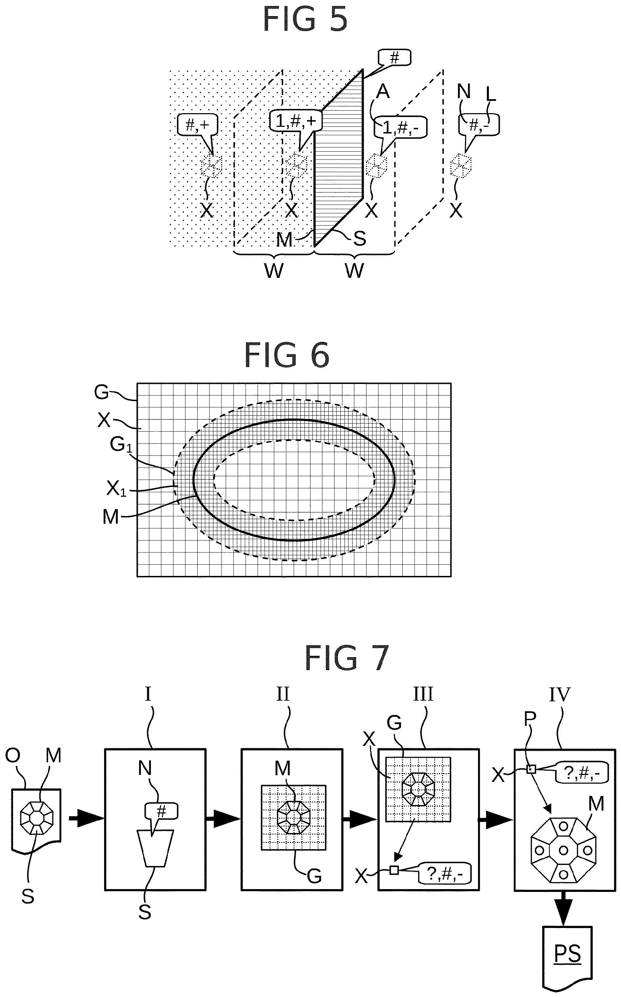

Figur 5 zeigt Voxel X, denen entsprechend ihrer Lage unterschiedliche Informationen N, L, A zugeordnet sind. Der gepunktete Bereich soll dabei den Innenraum eines Modells M symbolisieren. Dargestellt sind insgesamt vier Voxel X an unterschiedlichen Positionen. Ganz links liegt ein Voxel X im Innenbereich des Modells M. Diesem ist eine Lageinformation L und der Index N des nächstgelegenen Oberflächensegments S (schraffierte Fläche). Da der Abstand des Voxels X zu dem Oberflächensegment S größer ist, als ein vorgegebene Grenzwert W, der hier durch zwei schraffierte Flächen angedeutet ist, ist diesem Voxel X keine Abstandsinformation A zugeordnet.

Der Abstand A des nächsten Voxels X (von links nach rechts) zu dem Oberflächensegment S ist kleiner als der vorgegebene Grenzwert W. Daher ist diesem Voxel neben einer Lageinformation L und einem Index N zusätzlich eine Abstandsinforation A zugeordnet.

Der Abstand A des nächsten Voxels X (von links nach rechts) zu dem Oberflächensegment S ist ebenfalls kleiner als der vorgegebene Grenzwert W, es liegt jedoch außerhalb des Modells M. Daher ist diesem Voxel neben einer Lageinformation L (nun "-") und einem Index N ebenfalls eine Abstandsinforation A zugeordnet.

Das Voxel X ganz rechts liegt außerhalb des Grenzwerts. Wie beim Voxel ganz links sind diesem wiederum nur eine Lageinformation L und ein Index N zugeordnet.

Figur 6 zeigt eine zweidimensionale Darstellung von einem feinen Gitter G₁ aus Voxeln X₁ mit Abstandsinformation A und einem gröberen Gitter G aus Voxeln X nur mit Indices N und einer Lageinformation L. Es kann hier zunächst das gröbere Gitter G erstellt und die Informationen dessen Voxeln X zugewiesen werden. Danach kann aus dem Volumen derjenigen Voxel X des gröberen Gitters, durch die die Oberfläche des Modells M hindurchläuft, das zweite, feinere Voxelgitter G₁ erstellt werden (z.B. indem die betreffenden Voxel X weiter in feinere Voxel X₁ unterteilt werden). Diesen kann dann zusätzlich eine Abstandsinformation A hinzugefügt werden.

Figur 7 zeigt ein Blockdiagramm zum Verfahren zur Modifikation von oberflächenbasierten Bilddaten O eines dreidimensionalen geometrischen Modells M, geeignet für die additive Fertigung eines Bauteils.

Ganz links sind als Eingangsdaten die Bilddaten O dargestellt. Diese Bilddaten O umfassen Oberflächendaten O des Modells M mit geometrischen Informationen über eine Mehrzahl von Oberflächensegmenten S, die zusammen die Oberfläche des Modells M ergeben. Beispielsweise handelt es sich um eine STL-Datei eines Modells M, welches vorher gescannt oder mittels eines CAD-Programms erstellt worden ist.

In Schritt I wird jedem Oberflächensegment S des Modells M ein individueller Indexes N der Bilddaten O dermaßen zugeordnet, dass jedes indizierte Oberflächensegment S anhand seines Indexes N unterscheidbar zu allen anderen indizierten Oberflächensegmenten S des Modells M ist.

In Schritt II wird ein Voxelgitter G mit einer Vielzahl von Voxeln X erstellt. Dieses Voxelgitter G umgibt das Modell M und umfasst dieses Modell M, d.h. das Modell wird von Voxeln X des Voxelgitters G "gefüllt".

In Schritt III wird für jedes Voxel X des Voxelgitters G eine Lageinformation L bestimmt, die angibt, ob das betreffende Voxel X innerhalb oder außerhalb der Konturen des Modells M liegt und dem betreffenden Voxel X zugeordnet. Zusätzlich wird der Index N des nächstgelegenen Oberflächensegments S zu dem betreffenden Voxel X zugeordnet, und auch der Abstand des betreffenden Voxels X zu der Oberfläche des Modells M bestimmt und dem betreffenden Voxel X zugeordnet.

In Schritt IV erfolgt die Modifikation des Modells M durch die Verwendung der Voxeldaten zur Darstellung einer impliziten Repräsentation von Modell M. Diese implizite Repräsentation wird mit einer anderen impliziten Oberfläche, zum Beispiel einer sich wiederholenden Struktur, kombiniert. Die Kombination führt zu einer neuen impliziten Oberfläche, die das modifizierte Modell M darstellt.

Dies kann insbesondere dadurch erfolgen, dass Voxeln X ein Index N eines Oberflächensegments S zugewiesen ist, und für eine Vielzahl von Punkten P die folgenden Schritte durchgeführt werden:
- Auswählen eines Punktes P, in einem Voxel X,
- Ermitteln des Abstandes des Punktes P von dem Oberflächensegment S dem der betreffende Index N zugewiesen ist.

In der Praxis sind die nachfolgenden Schritte vorteilhaft:
- Prüfen ob sich der Index N von dem Index N eines Nachbarvoxels unterscheidet, und wenn ja: Ermitteln des Abstandes des Punktes P von dem Oberflächensegment S dem der betreffende Index N des Nachbarvoxels zugewiesen ist,
- Vergleichen der ermittelten Abstände und auswählen des kleinsten Abstandes.

Danach werden Steuerdaten PS basierend auf dem modifizierten Modell M ausgegeben. Optional können (z.B. geometrische) Größen aus dem modifizierten Modell M ermittelt werden und die Steuerdaten PS können alternativ oder ergänzend basierend auf den Größen ausgegeben werden. Aus der impliziten Oberfläche des modifizierten Modells M können beispielsweise Konturen extrahiert oder Oberflächensegmente berechnet werden.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass diese aus mehreren zusammenwirkenden Teil-Komponenten besteht, die gegebenenfalls auch räumlich verteilt sein können. Eine Formulierung "eine Anzahl" ist als "mindestens ein(e)" zu verstehen.

### Bezugszeichenliste

1 Vorrichtung zur additiven Fertigung / Lasersintervorrichtung
2 Bauteil / Objekt
3 Prozessraum / Prozesskammer
4 Kammerwandung
5 Behälter
6 Behälterwandung
7 Arbeitsebene
8 Baufeld
10 Träger
11 Grundplatte
12 Bauplattform
13 Aufbaumaterial (im Behälter 5)
14 Vorratsbehälter
15 Aufbaumaterial (im Vorratsbehälter 14)
16 Beschichter
17 Strahlungsheizung
20 Bestrahlungsvorrichtung / Belichtungsvorrichtung
21 Laser
22 Laserstrahl / Energiestrahl
23 Umlenkvorrichtung / Scanner
24 Fokussiereinrichtung
25 Einkoppelfenster
29 Steuereinheit
30 Steuereinrichtung
31 Bestrahlungssteuerschnittstelle
34 Modifikationsvorrichtung
35 Datenschnittstelle
36 Indexeinheit
37 Begrenzungseinheit
38 Prozesseinheit
40 Terminal
60 Bus
A Abstandsinformation / Abstand
B Begrenzungsvolumen / Bounding-Box
G, G₁ Voxelgitter
H horizontale Richtung
HS Heizungssteuerdaten
L Lageinformation
M Modell
N Index
O Oberflächendaten
P Punkt
PS Prozesssteuerdaten
S Oberflächensegment
SI Schichtinformationen
ST Beschichtungssteuerdaten
TS Trägersteuerdaten
V vertikale Richtung
W Grenzwert
X Voxel
X₁ kleines Voxel

## Patentansprüche

1. Verfahren zur Modifikation von oberflächenbasierten Bilddaten (O) eines dreidimensionalen geometrischen Modells (M), geeignet für die additive Fertigung eines Bauteils, die Bilddaten (O) umfassend Oberflächendaten (O) des Modells (M) mit geometrischen Informationen über eine Mehrzahl von Oberflächensegmenten (S), die zusammen die Oberfläche des Modells (M) ergeben, das Verfahren umfassend die Schritte:
- Erstellen einer Anzahl von Voxelgittern (G, G₁) mit jeweils einer Vielzahl von Voxeln (X, X₁), wobei jedes Voxelgitter (G, G₁) zumindest einen Teil der Oberflächensegmente (S) umfasst und umgibt,
- für die Voxel (X, X₁) der Voxelgitter (G, G₁):
a) Bestimmen einer Lageinformation (L), die angibt, ob das betreffende Voxel (X, X₁) innerhalb oder außerhalb der Konturen des Modells (M) liegt, und Zuordnen der Lageinformation (X, X₁) zu dem betreffenden Voxel (X, X₁) und/oder
b) Zuweisen eines individuellen Indexes (N) zu zumindest einem Teil der Oberflächensegmente (S) der Bilddaten (O), so dass jedes indizierte Oberflächensegment (S) anhand seines Indexes (N) unterscheidbar zu allen anderen indizierten Oberflächensegmenten (S) des Modells (M) ist und Zuordnen des Indexes (N) des nächstgelegenen Oberflächensegments (S) zu dem betreffenden Voxel (X, X₁), und/oder
c) Bestimmen eines Abstandes des betreffenden Voxels (X, X₁) zu der Oberfläche des Modells (M) und Zuordnung einer entsprechenden Abstandsinformation (A) zu dem betreffenden Voxel (X, X₁),
- Ausgeben der Voxel (X, X₁) mit den ihnen zugewiesenen Informationen (N, L, A).

2. Verfahren gemäß Anspruch 1, wobei Voxel (X, X₁), denen derselbe Index (N) und/oder dieselbe Lageinformation (L) zugewiesen sind, zu einer Gruppe zusammengefasst werden, bevorzugt wobei Voxel (X, X₁), denen eine Abstandsinformation (A) zugewiesen ist, als einzelne Voxel (X, X₁) behandelt werden.

3. Verfahren gemäß einem der vorstehenden Ansprüche, wobei mehrere Voxelgitter (G, G₁) unterschiedlicher Auflösung und/oder unterschiedlicher Größe erstellt werden und die Zuordnung einer entsprechenden Abstandsinformation (A) und/oder eines Index (N) und/oder einer Lageinformation (L) zu dem betreffenden Voxel (X, X₁) in Abhängigkeit dazu erfolgt, in welchem Voxelgitter (G, G₁) dieses Voxel (X, X₁) liegt,
bevorzugt wobei zumindest ein erstes Voxelgitter (G) und ein zweites Voxelgitter (G₁) derart definiert werden, dass das erste Voxelgitter (G) eine gröbere Auflösung als das zweite Voxelgitter (G₁) hat und/oder größer ist als das zweite Voxelgitter (G₁), wobei im letzteren Fall das zweite Voxelgitter (G₁) bevorzugt innerhalb des ersten Voxelgitters (G, G₁) liegt.

4. Verfahren nach Anspruch 3, wobei nur Voxeln (X, X₁) eine Abstandsinformation (A) zugeordnet wird, die einen Abstand geringer als einen vorbestimmten maximalen Abstand von der Oberfläche haben, bevorzugt wobei der maximale Abstand im ersten Voxelgitter (G) größer ist als im zweiten Voxelgitter (G₁), oder im ersten Voxelgitter (G) den Voxeln (X) eine Lageinformation (L) und/oder ein Index (N) zugeordnet wird und keine Abstandsinformation (A),
wobei bevorzugt jedem Voxel (X, X₁), dem eine Abstandsinformation (A) zugewiesen wird, zumindest auch eine Lageinformation (L) zugewiesen wird.

5. Verfahren gemäß einem der vorstehenden Ansprüche, wobei für die Bestimmung von Abstandsinformation (A) und/oder Index (N) und/oder Lageinformation (L)
- ein Voxelgitter (G, G₁) voxelweise durchgerastert, der betreffende Wert für jedes Voxel (X, X₁) des Voxelgitters (G, G₁) bestimmt und zugeordnet wird, und bei der Bestimmung des Abstandes ausgehend von jedem durchgerasterten Voxel (X, X₁) bevorzugt der kürzeste Abstand zur Oberfläche des Modells (M) bestimmt wird oder
- das Modell (M) oberflächensegmentweise durchgerastert wird und für die das jeweilige Oberflächensegment (S) umgebenden Voxel (X, X₁), der für jedes Voxel (X, X₁) betreffende Wert bestimmt und dem betreffenden Voxel (X, X₁) zugeordnet wird,
bevorzugt wobei im Rahmen einer Überprüfung bezüglich einem zu überprüfenden Voxel (X, X₁) die dieses Voxel (X, X₁) umgebenden Voxel (X, X₁) daraufhin überprüft werden, ob diesen ein Index (N) eines anderen Oberflächensegments (S) zugewiesen wurde als dem zu überprüfenden Voxel (X, X₁) und im positiven Falle zusätzlich der Abstand des zu überprüfenden Voxels (X, X₁) zu dem anderen Oberflächensegment (S) ermittelt wird und bestimmt wird, ob dieser Abstand kleiner ist als der Abstand zu dessen ursprünglich zugeordnetem Oberflächensegment (S).

6. Verfahren nach einem der vorstehenden Ansprüche, wobei Voxeln (X, X₁) eines Voxelgitters (G, G₁), bevorzugt des feinsten Voxelgitters (G1), ein Index (N) eines Oberflächensegments (S) zugewiesen ist, und wobei für eine Vielzahl von Punkten (P) die folgenden Schritte durchgeführt werden:
- Auswählen eines Punktes (P), in einem Voxel (X, X₁) des Voxelgitters (G, G₁),
- Ermitteln des Abstandes des Punktes (P) von dem Oberflächensegment (S) dem der betreffende Index (N) zugewiesen ist,
bevorzugt wobei die weiteren Schritte durchgeführt werden:
- Prüfen ob sich der Index (N) von dem Index (N) eines Nachbarvoxels unterscheidet, und wenn ja: Ermitteln des Abstandes des Punktes (P) von dem Oberflächensegment (S) dem der betreffende Index (N) des Nachbarvoxels zugewiesen ist,
- Vergleichen der ermittelten Abstände und auswählen des kleinsten Abstandes.

7. Verfahren nach Anspruch 6, wobei den Voxeln (X, X₁) des Voxelgitters (G, G₁), zusätzlich eine Abstandsinformation (A) zugewiesen ist, und der Abstand des Punktes (P) von dem Oberflächensegment (S) nur ermittelt wird, wenn der aus der Abstandsinformation (A) ablesbare Abstand des Voxels einen Maximalabstand unterschreitet und/oder wobei den Voxeln (X, X₁) des Voxelgitters (G, G₁), zusätzlich eine Lageinformation (L) zugewiesen ist, und diese Lageinformation (L) dem Punkt (P) zugewiesen wird, bevorzugt wobei in dem Fall, dass die Lageinformation eine Lage des Voxels (X, X₁) auf dem Rand anzeigt, zusätzlich die entsprechende Lageinformation für den Punkt (P) berechnet wird.

8. Verfahren gemäß einem der vorstehenden Ansprüche, wobei die ausgegebenen Voxel (X, X₁) mit den ihnen zugewiesenen Informationen (N, L, A) dazu verwendet werden, Schnittebenen des Modells (M) zu erstellen, insbesondere für ein additives Fertigungsverfahren, bevorzugt wobei das Modell (M) ein modifiziertes Modell (M) nach Anspruch 7 ist.

9. Verfahren gemäß einem der vorstehenden Ansprüche, wobei die ausgegebenen Voxel (X, X₁) mit den ihnen zugewiesenen Informationen dazu verwendet werden, Steuerdaten (PS) für eine Fertigungsvorrichtung (1) zur additiven Fertigung eines Bauteils (2) in einem Fertigungsprozess zu generieren, in welchem in einem Baufeld (8) Aufbaumaterial (13), vorzugsweise umfassend ein Metallpulver, schichtweise aufgebaut wird und jeweils zwischen dem Aufbringen zweier Materialschichten von Aufbaumaterial (13) eine selektive Verfestigung von Aufbaumaterial dadurch erfolgt, dass eine Bestrahlung des Aufbaumaterials (13) mit zumindest einem Energiestrahl (AL) erfolgt.

10. Modifikationsvorrichtung (34) zur Modifikation von oberflächenbasierten Bilddaten (O) eines dreidimensionalen geometrischen Modells (M) geeignet für die additive Fertigung eines Bauteils (2), die Bilddaten (O) umfassend Oberflächendaten (O) des Modells (M) mit geometrischen Informationen über eine Mehrzahl von Oberflächensegmenten (S), die zusammen die Oberfläche des Modells (M) ergeben, die Modifikationsvorrichtung (34) umfassend:
- eine Datenschnittstelle (35) ausgelegt zum Empfang der Bilddaten (O),
- eine Begrenzungseinheit (37) ausgelegt zum Erstellen einer Anzahl von Voxelgittern (G, G₁) mit jeweils einer Vielzahl von Voxeln (X, X₁) wobei jedes Voxelgitter (G, G₁) zumindest einen Teil der Oberflächensegmente (S) umfasst und umgibt,
- eine Prozesseinheit (38) ausgelegt zum:
a) Bestimmen einer Lageinformation (L), die angibt, ob das betreffende Voxel (X, X₁) innerhalb oder außerhalb der Konturen des Modells (M) liegt, und Zuordnen der Lageinformation (L) zu dem betreffenden Voxel (X, X₁) und/oder
b) Zuordnen des Indexes (N) des nächstgelegenen Oberflächensegments (S) zu dem betreffenden Voxel (X, X₁), wobei die Modifikationsvorrichtung (34) dazu eine Indexeinheit (36) umfasst, ausgelegt zum Zuweisen eines individuellen Indexes (N) zu zumindest einem Teil der Oberflächensegmente (S), so dass jedes indizierte Oberflächensegment (S) anhand seines Indexes (N) unterscheidbar zu allen anderen indizierten Oberflächensegmenten (S) des Modells (M) ist, und/oder
c) Bestimmen eines Abstandes des betreffenden Voxels (X, X₁) zu der Oberfläche des Modells (M) und Zuordnung einer entsprechenden Abstandsinformation (A) zu dem betreffenden Voxel (X, X₁),
- eine Datenschnittstelle (35) ausgelegt zum Ausgeben der Voxel (X, X₁) mit den ihnen zugewiesenen Informationen (N, L, A).

11. Steuereinrichtung (30) für eine Fertigungsvorrichtung (1) zur additiven Fertigung eines Bauteils (2) in einem Fertigungsprozess, in welchem in einem Baufeld (8) Aufbaumaterial (13), vorzugsweise umfassend ein Metallpulver, schichtweise aufgebaut wird und jeweils zwischen dem Aufbringen zweier Materialschichten von Aufbaumaterial (13) eine selektive Verfestigung von Aufbaumaterial (13) dadurch erfolgt, dass eine Bestrahlung des Aufbaumaterials (13) mit zumindest einem Energiestrahl (AL) mittels einer Bestrahlungsvorrichtung (20) erfolgt, wobei die Steuereinrichtung (30) eine Modifikationsvorrichtung (34) gemäß Anspruch 10 umfasst.

12. Fertigungsvorrichtung (1) zur additiven Fertigung zumindest eines Bauteils (2) in einem additiven Fertigungsprozess umfassend zumindest
- eine Zuführvorrichtung zum Aufbringen von Materialschichten von Aufbaumaterial (13) in einem Baufeld in einen Prozessraum (3),
- eine Bestrahlungsvorrichtung (20), um zwischen dem Aufbringen zweier Materialschichten Aufbaumaterial (13) durch Bestrahlung mit zumindest einem Energiestrahl (AL) selektiv zu verfestigen, sowie
- eine Steuereinrichtung (30) nach Anspruch 11.

13. Datensatz umfassend oberflächenbasierte Bilddaten (O) eines Modells (M) zusammen mit Daten einer Vielzahl von Voxeln (X, X₁) mit den ihnen zugewiesenen Informationen (N, L, A), die mittels eines Verfahrens nach einem der Ansprüche 1 bis 9 erstellt worden sind, insbesondere Steuerdaten (PS) zur Steuerung einer Fertigungsvorrichtung (1) zur additiven Fertigung, welche nach einem Verfahren gemäß Anspruch 9 generiert worden sind.

14. Fertigungsverfahren zur additiven Fertigung eines Bauteils (2), wobei in einem Baufeld (8) Aufbaumaterial (13), vorzugsweise umfassend ein Metallpulver, schichtweise aufgebaut wird und jeweils zwischen dem Aufbringen zweier Materialschichten von Aufbaumaterial (13) eine selektive Verfestigung von Aufbaumaterial (13) dadurch erfolgt, dass eine Bestrahlung des Aufbaumaterials (13) mit zumindest einem Energiestrahl (AL) basierend auf Bilddaten (O) erfolgt, die mittels eines Verfahrens gemäß einem der Ansprüche 1 bis 9 modifiziert worden sind.

15. Computerprogrammprodukt mit einem Computerprogramm, welches direkt in eine Speichereinrichtung einer Recheneinrichtung, insbesondere einer Steuereinrichtung (30) einer Fertigungsvorrichtung (1) zur additiven Fertigung einer Bauteilschicht eines Bauteils (2), ladbar ist, mit Programmabschnitten, um alle Schritte des Verfahrens nach einem der Ansprüche 1 bis 9 auszuführen, wenn das Computerprogramm in der Recheneinrichtung ausgeführt wird.
